# DEMANDE DE BREVET EUROPEEN

(11) **EP 0 813 323 A1**
(43) Date de publication de la demande: **17.12.1997**
(21) Numéro de dépôt: 97401323.7
(22) Date de dépôt: 12.06.1997
(51) Int. Cl.: H04L 9/32

(54) **Procédé et dispositif de sécurisation d'une liaison téléphonique reliant deux postes d'abonnés**

(30) Priorité: 14.06.1996 FR 9607449
(71) Demandeur: FRANCE TELECOM, 75015 Paris (FR)
(72) Inventeur: Fiori, Costantino, 38130 Echirolles (FR)
(74) Mandataire: Casalonga, Axel

(57) **Abrégé**

La liaison téléphonique comporte deux terminaux de réseau (TR1,TR2) auxquels sont respectivement connectés les deux postes d'abonnés, deux lignes d'abonnés (LA1,LA2) reliant respectivement les deux terminaux de réseau à deux terminaux de ligne (TL1,TL2) respectivement situés au niveau de deux commutateurs locaux (CML1,CML2) mutuellement reliés par un réseau téléphonique commuté (RTPC). Les terminaux de réseau (TR1) et de ligne (TL1) de l'une au moins des lignes d'abonnés (LA1) sont respectivement équipés de moyens de cryptage/décryptage-réseau (MCDR1) et de moyens de cryptage/décryptage-ligne (MCDL1). On crypte les informations utiles échangées entre les deux postes d'abonnés, au moins sur celle des deux lignes d'abonnés (LA1) connectée auxdits moyens de cryptage/décryptage, à partir d'au moins une clé de cryptage (CCRi) générée par lesdits moyens de cryptage/décryptage-réseau ou lesdits moyens de cryptage/décryptage-ligne, et variant temporellement de façon pseudo-aléatoire à l'initiative desdits moyens de cryptage/décryptage-réseau ou desdits moyens de cryptage/décryptage-ligne, les informations utiles échangées entre les deux postes d'appel étant transmises en clair au moins entre chaque terminal de réseau et le poste d'abonné correspondant.

## Description

L'invention concerne la sécurisation d'une liaison téléphonique reliant deux postes d'abonnés, c'est-à-dire notamment la protection de cette liaison téléphonique contre le piratage des informations échangées entre les deux postes d'abonnés.

Une liaison téléphonique comprend matériellement différents équipements tels que des terminaux de réseau, des terminaux de ligne, des lignes d'abonnés, des commutateurs locaux et le réseau téléphonique public commuté. Plus précisément, chaque poste d'abonné, par exemple un poste téléphonique ou un modem relié à un ordinateur, est connecté, par l'intermédiaire d'une prise abonné, à un terminal de réseau, essentiellement matériellement constitué d'une carte spécifique, telle que par exemple une carte dite TNR commercialisée par différentes sociétés telles que ALCATEL, SAT, SIEMENS ou PHILIPS. Chaque terminal de réseau est relié par l'intermédiaire d'une ligne d'abonné à un terminal de ligne situé au niveau d'un commutateur local. Le terminal de ligne comporte matériellement également une carte spécifique, en particulier une carte TABN commercialisée par ces mêmes sociétés, et comportant huit entrées/ sorties de façon à gérer huit lignes d'abonnés. Les deux commutateurs locaux associés à la liaison téléphonique reliant les deux postes d'abonnés considérés, sont mutuellement reliés par un réseau téléphonique publique commuté.

Le transfert, l'échange de données et de documents effectués au moyen de ces postes d'abonnés, sont devenus au cours de cette dernière décennie des méthodes de communications banalisées entre les individus et/ou les entités géographiquement éloignés. Ce processus mondial de communication électronique s'est encore accéléré au cours de ces dernières années avec le développement au niveau planétaire du réseau Internet. Par ces technologies, sans l'intervention apparente d'un intermédiaire et presque en temps réel, le monde économique échange et transmet des informations pouvant présenter des degrés plus ou moins élevés de confidentialité.

L'utilisation courante de ces nouvelles formes de communications a mis en relief le problème de la sécurisation des échanges entre correspondants, c'est-à-dire entre un émetteur et son destinataire. L'un des objectifs prioritaires de ceux-ci est alors d'éviter que les informations qu'ils font transiter par l'intermédiaire du réseau téléphonique publique commuté ne puissent être captées et utilisées à leur insu par des tiers. Une solution à ce problème pourrait consister à installer des moyens de cryptage/décryptage dans le réseau local de chaque abonné, c'est-à-dire en amont de la prise abonné. Dans ce cas, les informations échangées entre les deux postes d'abonnés sont cryptées de bout en bout entre chaque moyen de cryptage/décryptage installé au sein du réseau local de l'abonné. Néanmoins, une telle solution présente de nombreux inconvénients.

Elle nécessite tout d'abord que les matériels de cryptage/décryptage, et les logiciels correspondants implémentés dans ces matériels, soient parfaitement compatibles mutuellement. En pratique, les matériels et les logiciels devront être quasiment identiques. Or, ceci est difficilement réalisable, compte tenu de la très grande disparité pouvant exister entre les différents abonnés. Par ailleurs, une telle solution nécessite un organisme tiers gérant l'attribution des différentes clés de cryptage aux abonnés. En outre, la communication des clés de cryptage entre cet organisme tiers et chacun des abonnés, doit être également sécuritaire, ce qui constitue une difficulté supplémentaire.

Enfin, dans le cas où un abonné sécurisé souhaite contacter un abonné non sécurisé, le premier doit prévoir des moyens internes à son réseau local, capables de déconnecter ses propres moyens de cryptage/décryptage.

L'invention vise à apporter une solution à ces problèmes.

Un but de l'invention est de proposer une sécurisation d'une liaison téléphonique entre deux postes d'abonnés qui soit simple à gérer au niveau des clés de cryptage utilisées, et qui laisse l'ensemble du réseau transparent et ouvert en cas d'un échange de communication entre un abonné non sécurisé et un abonné sécurisé.

L'invention a également pour but de proposer un système de sécurisation qui s'adapte sans aucune contrainte supplémentaire, autres que celles déjà fixées par l'opérateur de télécommunication sur le réseau déjà existant, tout en assurant une bonne sécurisation des données transmises.

L'invention propose donc un procédé de sécurisation d'une liaison téléphonique reliant deux postes d'abonnés, ladite liaison comportant deux terminaux de réseau auxquels sont respectivement connectés les deux postes d'abonnés, deux lignes d'abonnés reliant respectivement les deux terminaux de réseau à deux terminaux de ligne respectivement situés au niveau de deux commutateurs locaux mutuellement reliés par un réseau téléphonique commuté. Selon une caractéristique générale de l'invention, les terminaux de réseau et de ligne de l'une au moins des lignes d'abonnés, sont respectivement équipés de moyens de cryptage/décryptage-réseau et de moyens de cryptage/décryptage-ligne. Le procédé comprend alors une étape de cryptage dans laquelle on crypte les informations utiles échangées entre les deux postes d'abonnés, au moins sur celles des deux lignes d'abonnés connectées auxdits moyens de cryptage-décryptage, à partir d'au moins une clé de cryptage générée par lesdits moyens de cryptage-décryptage-réseau ou lesdits moyens de cryptage-décryptage-ligne. On fait également varier temporellement de façon pseudo-aléatoire ladite clé de cryptage à l'initiative desdits moyens de cryptage-décryptage-réseau ou desdits moyens de cryptage-décryptage-ligne, les informations utiles échangées entre les deux postes d'appel étant transmises en clair au moins entre chaque terminal de réseau et le poste d'abonné correspondant.

En d'autres termes, une caractéristique essentielle de l'invention réside dans l'implantation dans le terminal de réseau et dans le terminal de lignes associés à l'un au moins des abonnés, de moyens de cryptage/décryptage capables d'adapter, en temps réel et de manière autonome, des protocoles de sécurisation à partir de clés de cryptage générées de façon autonome par l'un au moins de ces moyens de cryptage/décryptage, par exemple les moyens de cryptage/décryptage-ligne incorporés dans le terminal de ligne.

Ainsi, selon l'invention, dans le cas où un seul des abonnés est sécurisé, et dans l'hypothèse où celui-ci accepte néanmoins un échange d'informations avec un abonné non sécurisé, le cryptage des informations n'interviendra que sur la portion de la liaison téléphonique comprise entre le terminal de réseau de l'abonné sécurisé et le terminal de ligne situé au niveau du commutateur local, c'est-à-dire notamment sur la ligne d'abonné qui est la partie la plus facile à pirater.

En effet, il a été observé qu'il n'était pas indispensable de prévoir un cryptage des informations sur le réseau téléphonique commuté, c'est-à-dire entre les deux commutateurs locaux des deux postes d'abonnés. En effet, le cheminement sur ce réseau téléphonique commuté entre les deux commutateurs locaux n'est pas prédéterminé et peut varier au cours de l'échange des informations en fonction de l'encombrement du réseau.

Par ailleurs, tout abonné sécurisé pourra recevoir des informations de tous correspondants, qu'ils soient sécurisés ou non, et pourra transmettre des informations vers tous ses correspondants internes et externes, que ceux-ci soient sur des lignes sécurisées ou pas. En effet, si l'un des correspondants n'est pas sécurisé, les moyens de cryptage/décryptage-ligne installés dans le terminal de ligne de l'autre correspondant, qui est lui sécurisé, décrypteront les informations échangées de façon à ce que celles-ci soient transmises en clair sur le réseau téléphonique commuté puis sur la ligne d'abonné de l'abonné non sécurisé.

Par ailleurs, l'opérateur de télécommunication est le seul propriétaire des solutions et des matériels techniques qu'il utilise pour la sécurisation de ces lignes d'abonné. En pratique, il installera des matériels identiques et des logiciels identiques dans les différents commutateurs locaux et dans les différents terminaux de réseau. Le problème de la compatibilité des logiciels de cryptage-décryptage utilisés aux différents endroits du réseau téléphonique, est donc automatiquement assuré.

Par ailleurs, le fait que les clés de cryptage soient générées automatiquement par les terminaux de réseau et les terminaux de ligne rend l'accès à ces clés inaccessible à tout tiers, et même en théorie à l'opérateur lui-même, ce qui offre un degré supplémentaire de protection vis-à-vis des fraudeurs qui tenteraient de pirater le réseau. Ceci étant, afin de répondre à certaines exigences éventuelles, on peut prévoir que l'opérateur puisse avoir un accès réservé aux mémoires vives associées aux différents moyens de cryptage/décryptage de façon à pouvoir connaître en temps réel, le cas échéant, la clé de cryptage utilisée à l'instant courant.

Bien que l'invention soit applicable à tous réseaux téléphoniques, en particulier des réseaux téléphoniques analogiques à condition de prévoir des conversions analogique/numérique pour le cryptage des informations, l'invention s'applique de préférence et de façon avantageuse à un réseau téléphonique numérisé tel que le réseau numérique à intégration de services (RNIS) défini dans les recommandations UIT-T de la série I éditées par l'Union Internationale des Télécommunications (antérieurement CCITT).

D'une façon plus générale, dans une liaison téléphonique numérique, il est prévu au moins deux canaux bidirectionnels, ou canaux B, pour l'échange des informations proprement dites entre les deux postes d'abonnés, c'est-à-dire par exemple des informations orales ou des données informatiques issues d'ordinateur ou bien encore des contenus de lettres transmises par télécopie, ainsi qu'un canal de service, ou canal D, fonctionnant en mode message pour le transport de la signalisation et des services en mode paquet.

Dans le cas d'une application de l'invention à un réseau numérisé, on s'affranchit donc de toute conversion analogique/numérique, ce qui simplifie les moyens mis en oeuvre, et on utilise alors avantageusement le canal de service pour transmettre la ou les clés de cryptage. En effet, il a été observé qu'il s'avérait très difficile, voire quasiment impossible, de pouvoir intercepter et exploiter les données circulant sur ce canal de service, notamment lorsqu'elles sont elles-mêmes sécurisées par des moyens de cryptage/décryptage tels que des algorithmes à clés publiques du type RSA. Par ailleurs, au sens de la présente invention, et dans le cas d'un réseau numérisé, les informations utiles destinées à être cryptées/décryptées sont celles véhiculées sur les canaux B.

Dans le cas où les terminaux de réseau et de lignes des deux lignes d'abonnés sont respectivement équipés de moyens de cryptage/décryptage-réseau et de moyens de cryptage/décryptage-ligne, c'est-à-dire dans le cas où les deux abonnés sont sécurisés, on peut alors, dans l'étape de cryptage, crypter les informations utiles échangées entre les deux postes d'abonnés sur l'ensemble de la liaison téléphonique s'étendant entre les deux terminaux de réseau auxquels sont respectivement connectés les postes d'abonnés. Ceci offre un degré supplémentaire de sécurisation.

Dans un mode de mise en oeuvre préféré de l'invention, on prévoit, préalablement à l'étape de cryptage des informations, une étape d'authentification des différents terminaux dialoguant entre eux. Plus précisément, chaque poste d'abonné étant connecté à son terminal de réseau correspondant par une borne d'entrée-sortie spécifique dudit terminal reliée à la prise d'abonné, on affecte un identifiant à chaque borne d'entrée-sortie. Cet identifiant peut être simplement le numéro d'appel téléphonique de l'abonné ou mieux, un code secret implanté dans le terminal réseau. Dans l'étape d'identification, ceux des moyens de cryptage/décryptage, par exemple les moyens de cryptage/ décryptage-ligne incorporés dans le terminal de ligne, qui ont généré la clé de cryptage, la transmettent aux autres moyens de cryptage/décryptage, par exemple les moyens de cryptage/décryptage-réseau incorporés dans le terminal de réseau de l'abonné, et effectuent une procédure de vérification de l'identifiant de la borne d'entrée-sortie considérée. Ce n'est seulement que lorsque cet identifiant à été vérifié, que le cryptage des informations utiles échangées entre les deux postes d'abonné peut débuter.

Il est également avantageux de prévoir d'effectuer cette étape d'authentification pendant l'étape de cryptage après chaque modification de la clé de cryptage.

Selon un mode de mise en oeuvre du procédé selon l'invention, dans l'étape de cryptage, la variation temporelle pseudo-aléatoire de la clé de cryptage générée par ceux des deux moyens de cryptage-décryptage, par exemple les moyens de cryptage/décryptage-ligne, comprend la génération temporelle successive de façon pseudo-aléatoire de plusieurs autres clés de cryptage par ces mêmes moyens de cryptage/décryptage. Ainsi, en d'autres termes, et en pratique, les moyens de cryptage/décryptage-ligne incorporés dans le terminal de ligne, vont générer successivement de façon pseudo-aléatoire, plusieurs clés de cryptage au cours de l'échange des informations. A chaque nouvelle clé générée, le codage des informations utiles va donc être modifié, et ce temporellement de façon pseudo-aléatoire.

Lorsque les deux abonnés sont sécurisés, l'étape de cryptage comprend avantageusement la génération d'une clé de cryptage par les moyens de cryptage/décryptage-ligne de l'un des deux terminaux de ligne puis la transmission de cette clé de cryptage aux moyens de cryptage/décryptage-ligne de l'autre terminal de ligne. Les informations échangées entre les deux postes d'abonnés sont alors cryptées/décryptées à partir de cette clé de cryptage. Les moyens de cryptage/décryptage-ligne du terminal de ligne'ayant généré la clé de cryptage, la font varier temporellement de façon pseudo-aléatoire et transmettent ies clés ainsi modifiées aux moyens de cryptage/décryptage-ligne de l'autre terminal de ligne.

Bien entendu, chaque terminal de ligne transmet à son terminal de réseau associé, la clé de cryptage, après authentification de ce dernier. A cet égard, on peut également prévoir avantageusement une procédure d'authentification telle que celle décrite ci-avant, entre les deux terminaux de ligne.

D'une façon générale, lorsque le réseau est numérisé, on effectue avantageusement la procédure de vérification d'identifiant en utilisant le canal de service.

L'invention a également pour objet un dispositif de sécurisation d'une ligne téléphonique reliant deux postes d'abonné. Selon une caractéristique générale de l'invention, ce dispositif comprend au moins des moyens de cryptage/décryptage-réseau et des moyens de cryptage/décryptage-ligne respectivement incorporés dans les terminaux de réseau et de ligne de l'une au moins des lignes d'abonnés. Lesdits moyens de cryptage/décryptage-réseau ou lesdits moyens de cryptage/décryptage-ligne sont aptes à générer au moins une clé de cryptage, à la faire varier temporellement de façon pseudo-aléatoire, et à crypter les informations utiles échangées entre les deux postes d'abonnés à partir de la clé de cryptage, et ce au moins sur celles des deux lignes d'abonnés connectée auxdits moyens de cryptage/décryptage. Les informations échangées entre les deux postes d'appel sont transmises en clair au moins entre chaque terminal de réseau et le poste d'abonné correspondant.

Selon un mode de réalisation du dispositif, les moyens de cryptage/décryptage-ligne comportent des moyens de génération pseudo-aléatoire d'une pluralité de clés de cryptage.

D'autres avantages et caractéristiques de l'invention apparaîtront à l'examen de modes de réalisation et de mise en oeuvre, nullement limitatifs, et des dessins annexés, sur lesquels :
- la figure 1 est un synoptique schématique d'une liaison téléphonique entre deux postes d'abonnés,
- la figure 2 illustre schématiquement l'architecture interne d'un terminal de réseau équipé de moyens de cryptage/décryptage,
- la figure 3 illustre de façon schématique une carte électronique d'un terminal de ligne équipée de moyens de cryptage-décryptage,

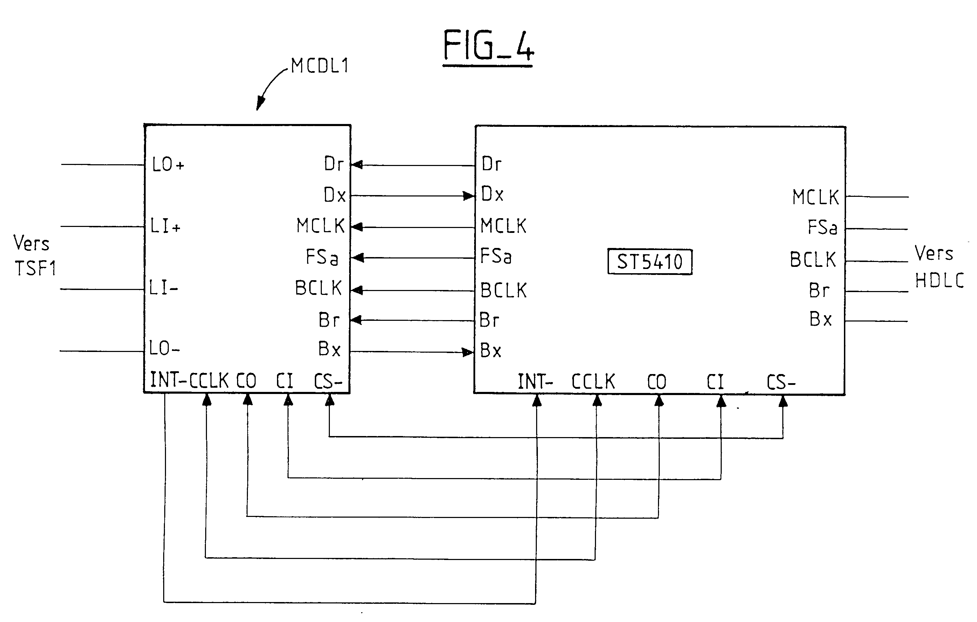

- la figure 4 illustre plus en détail une partie de la carte de la figure 3, et
- la figure 5 est un organigramme fonctionnel schématique illustrant les modes de mise en oeuvre du procédé selon l'invention.

On va maintenant décrire un mode de réalisation de l'invention utilisant un réseau numérisé.

D'une façon générale, l'homme du métier sait qu'un réseau numérique comporte, sur une paire téléphonique en cuivre, deux canaux bidirectionnels, ou canaux B, à 64 Kbits/s, commutés en mode circuit, et qui sont utilisés pour transporter tous types d'information utiles échangés entre les deux abonnés, par exemple une conversation téléphonique, des données informatiques, etc.

Outre ces deux canaux bidirectionnels B, il est également prévu un canal de service, dit canal D, à 16 Kbits/s, fonctionnant en mode message pour le transport de la signalisation et des services en mode paquet. Une telle structure est notamment celle adoptée pour le réseau numérique à intégration de services RNIS dit "bande étroite". Alors que l'accès au débit de base, décrit ci-avant, et encore appelé 2B+D, est limité à 144 Kbits/s, il est également prévu un accès dit "primaire", ou encore appelé 30B+D, possédant un débit de 2048 Kbits/s, et comportant 30 canaux bidirectionnels B, et un canal D exploité en mode paquet et support la signalisation. L'accès dit primaire permet de développer une large gamme d'applications télé-informatiques combinant la voix, les données, le texte et l'image.

Bien que la structure générale d'un réseau téléphonique numérique soit parfaitement connue par l'homme du métier, ce dernier pourra néanmoins se référer pour plus de détails aux recommandations UIT-T de la série I, éditée par l'Union Internationale des Télécommunications et se rapportant aux différents aspects techniques et structurels, notamment du réseau numérique avec intégration des services (RNIS).

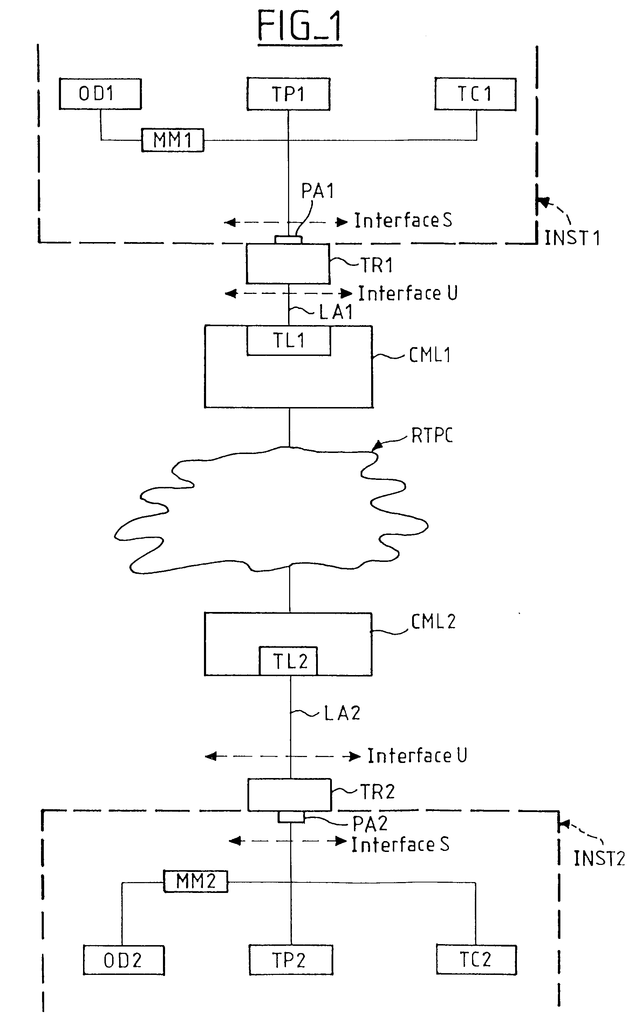

Telle qu'illustrée sur la figure 1, l'installation terminale d'abonné INST1 comporte par exemple un poste téléphonique TP1, un ordinateur OD1 associé à un modem MM1, ainsi qu'un télécopieur TC1. L'ensemble de ces appareils sont relies a une prise d'abonné PA1 reliée en sortie d'un terminal de réseau TR1.

Le terminal de réseau TR1 est relié par une ligne d'abonné LA1 à un terminal de ligne TL1 incorporé dans un commutateur local CML1.

Le commutateur local CML1 est relié au commutateur local CML2 de l'autre abonné par l'intermédiaire du réseau téléphonique public commuté RTPC.

On retrouve en ce qui concerne le deuxième abonné, comme illustré sur le bas de la figure 1, des éléments analogues à ceux qui viennent d'être décrits pour le premier abonné.

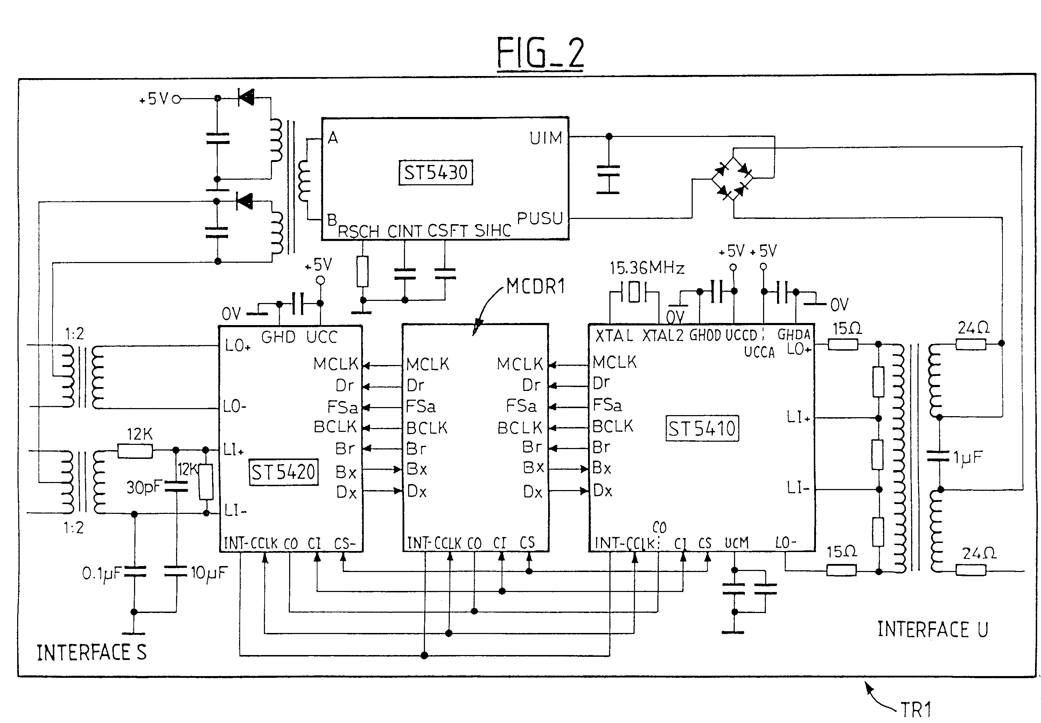

La figure 2 illustre une carte électronique selon l'invention incorporée dans le terminal de réseau TR1 situé au niveau de l'installation INST1 de l'abonné.

Cette carte a été modifiée par rapport à une carte classique du type de celle connue sous la référence TNR et commercialisée par exemple par la Société ALCATEL.

La modification selon l'invention consiste à introduire, via le bus interne qui relie le circuit d'interface normalisé U et le circuit d'interface normalisé S d'une carte du type TNR usuelle, un circuit de contrôle et de cryptage/décryptage référencé MCDR1. A titre d'exemple, ce circuit de contrôle et de cryptage/décryptage s'articule autour d'un microprocesseur MOTOROLA 68020 travaillant à la fréquence de 16MHz associé à des ensembles de mémoires mortes du type ROM et EEPROM, dans lesquelles sont implantées des algorithmes de cryptage/décryptage du type DES (Data Encryption Standard). Bien entendu, l'invention n'est pas limitée à l'utilisation d'algorithmes DES pour le cryptage/décryptage des données, mais peut également utiliser des algorithmes à clés publiques du type RSA. Outre les moyens de cryptage/décryptage, le microprocesseur incorpore des moyens d'authentification permettant, comme on le verra plus en détail ci-après, d'effectuer avant le cryptage des informations, une vérification de l'identifiant des postes et/ou terminaux appelés. Ces moyens sont bien entendu réalisés de façon logicielle et incorporés dans les mémoires mortes associées au microprocesseur.

Le microprocesseur retenu crypte ou décrypte en mode DES 3500 blocs par seconde (un bloc DES est constitué de 64 bits). Cette vitesse de traitement est tout à fait compatible avec les vitesses de transmission du réseau numérique décrit ici, qui est de 64 Kbits/s pour un canal B. Ainsi, en mode DES, les moyens de cryptage/décryptage cryptent ou décryptent 1000 blocs à la seconde afin d'être compatibles avec le débit du réseau RNIS.

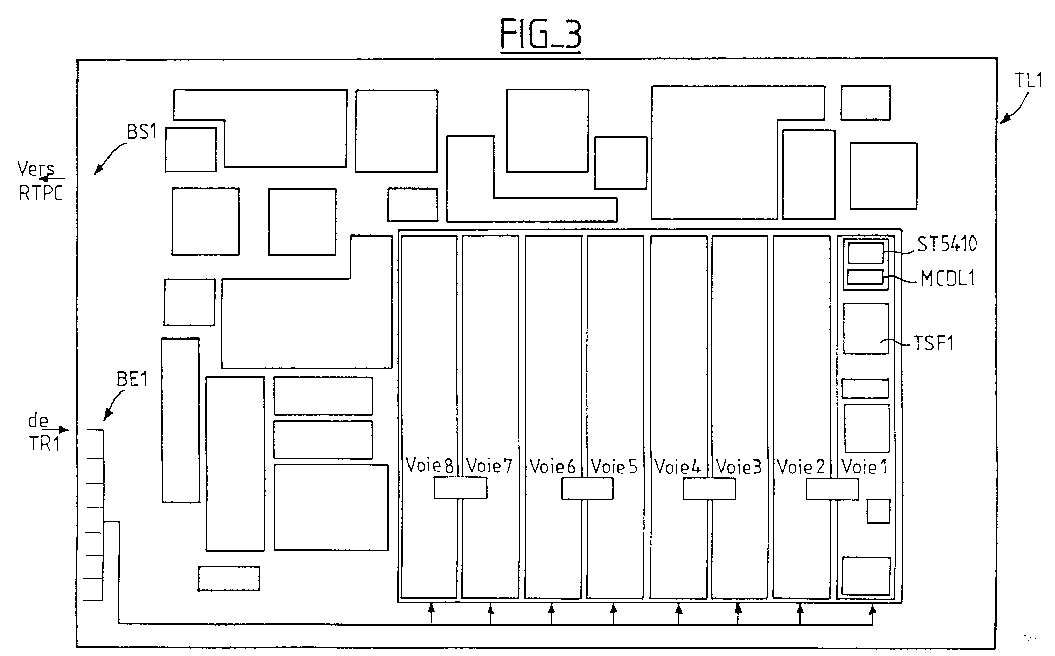

D'une façon plus précise, comme on le voit sur la figure 2, le microprocesseur MCDR1 et ses mémoires associées est disposé entre les deux circuits classiques ST5410 et ST5420 (commercialisés par la Société SGS THOMSON) d'une carte usuelle. Le microprocesseur est broché comme illustré schématiquement et partiellement sur la figure 2, de façon à notamment recevoir les signaux Dx et Dr d'entrée et de sortie de canal D, les signaux Bx et Br d'entrée et de sortie de canal B ainsi que les signaux d'horloge correspondants. Du côté de la carte électronique incorporée dans le terminal de ligne TL1 et illustrée très schématiquement sur la figure 3, on retrouve des modifications en tous points symétriques à celles décrites pour la carte incorporée dans le terminal de réseau TR1.

D'une façon générale, ce genre de carte, telle que par exemple les cartes TABN de chez ALCATEL, ou bien des cartes analogues commercialisées par les Sociétés SAT, PHILIPS ou SIEMENS, comportent une borne d'entrée BE1 capable de gérer huit terminaux de réseaux différents correspondant à huit abonnés différents. Les huit entrées du connecteur BE1 sont respectivement reliées à huit voies de traitement qui sont par ailleurs reliées aux unités de traitement HDLC (High level Data link Control) de la carte qui reçoivent les données provenant du réseau téléphonique commuté et qui transmettent vers ce dernier les données arrivant des cartes TR1 qui lui sont attachées. D'une façon classique, outre les huit voies représentées sur cette carte, sont prévus également divers blocs logiques, des blocs-mémoire ainsi qu'un microprocesseur tel que par exemple le microprocesseur 80C186. Chacune des voix de la carte TL1 comporte notamment un transformateur TSF1 de l'interface normalisé U et un circuit ST5410 analogue au circuit de la carte TR1. L'invention prévoit donc ici l'insertion entre le circuit ST5410 et le transformateur TSF1 d'un microprocesseur MCDL1 analogue au microprocesseur MCDR1 incorporé dans le terminal de réseau TR1.

On peut également prévoir un seul microprocesseur de cryptage/décryptage agencé selon un mode de multiplexage/ démultiplexage capable de travailler sur les huit voies en simultané.

Bien entendu, sur une même carte TR1 gérant huit abonnés, certaines des voix peuvent ne pas comporter un microprocesseur MCDR1 dans le cas où l'abonné ne souhaite pas profiter du service de sécurisation proposé par l'opérateur.

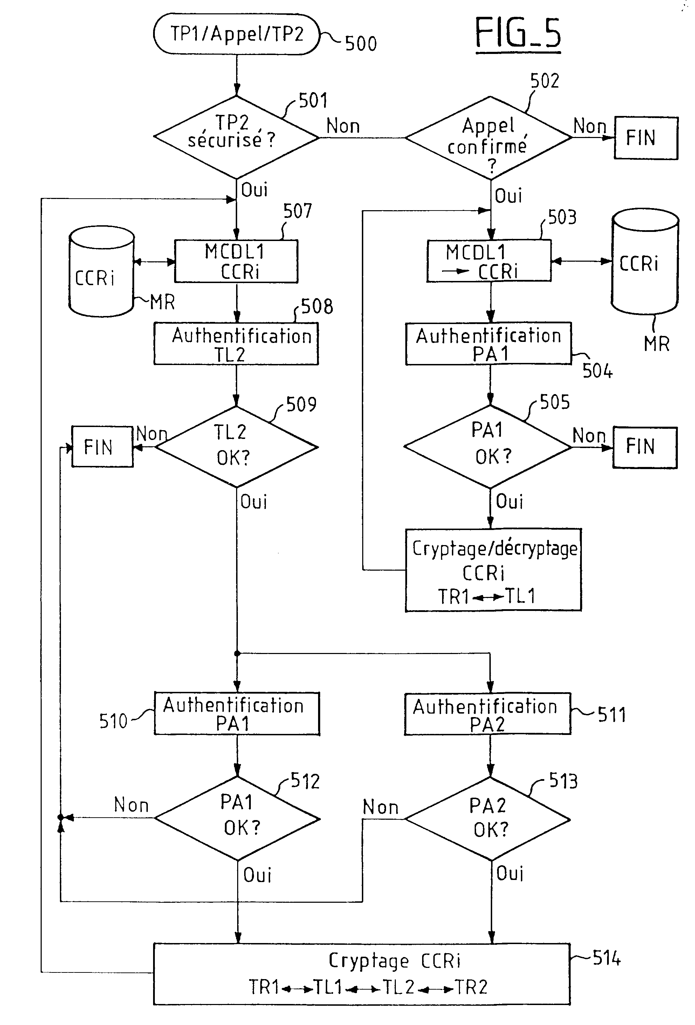

On va maintenant décrire plus en détail en se référant plus particulièrement à la figure 5, un mode de fonctionnement du dispositif de sécurisation selon l'invention.

On suppose maintenant que dans une étape 500, l'abonné 1 décide, par l'intermédiaire de son poste téléphonique TP1, d'appeler le poste téléphonique de l'abonné 2.

D'une façon générale, chaque prise abonné possède un identifiant qui peut être par exemple le numéro d'appel téléphonique de l'abonné correspondant. L'opérateur dispose d'un fichier central et/ou de fichiers locaux répertoriant les abonnés qui ont souscrit au service de sécurisation.

Aussi, lorsque l'abonné TP1 appelle l'abonné TP2, le microprocesseur du terminal de ligne TL1, par exemple, peut, à la connaissance du numéro d'appel du poste TP2, savoir si cet abonné fait partie des abonnés sécurisés ou non (étape 501). On suppose, dans un premier temps, que l'abonné ayant le poste d'appel TP2, ne fait pas partie de ces abonnés sécurisés.

Dans ce cas, le microprocesseur MCDL1 renvoie, par l'intermédiaire du canal D, une information sur l'écran, par exemple, du poste d'appel TP1, informant celui-ci que l'abonné destinataire.n'est pas sécurisé. Si l'abonné TP1 souhaite interrompre la communication, l'échange prend fin.

Dans le cas où il confirme son appel (étape 502), le procédé de sécurisation va débuter, et ne va comporter un cryptage des informations qu'entre le terminal de réseau TR1 et le terminal de ligne TL1.

Le procédé selon l'invention commence alors par une étape d'authentification mutuelle du terminal de ligne TL1 et du terminal de réseau TR1. Plus précisément, si l'on suppose que le processeur MCDL1 incorporé dans le terminal TL1 est le processeur maître et que le processeur MCDR1 est esclave (on aurait pu également prévoir l'inverse), le processeur MCDL1 va alors choisir de façon pseudo-aléatoire dans une mémoire MR contenant une table de clés de cryptage CCRi, une première clé de cryptage CCR1 (étape 503).

D'un point de vue pratique, on peut par exemple prévoir que le microprocesseur incorpore fonctionnellement un générateur pseudo-aléatoire générant, à la cadence d'horloge du microprocesseur, des indications numériques représentatives des différentes adresses de la mémoire MR. Lorsque le microprocesseur veut générer une clé de cryptage, l'unité centrale de ce dernier lit alors la valeur courante fournie par le générateur pseudo-aléatoire et extrait de la mémoire MR la clé de cryptage contenue à l'adresse correspondant à cette valeur courante.

Cette clé de cryptage est alors cryptée par les moyens de cryptage/décryptage-ligne et transmise sur le canal D aux moyens de cryptage/décryptage-réseau contenus dans le terminal de réseau TR1. Ces derniers, après avoir décrypté la clé de cryptage, renvoient, toujours sur le canal D, l'identifiant de la prise abonné PA1 codé au moyen de cette clé de cryptage.

Les moyens de cryptage/décryptage-ligne décodent cet identifiant et vérifient l'identité du terminal de réseau TR1 (étape 504).

En cas d'anomalie (étape 505), le processus de sécurisation prend fin.

Dans le cas contraire, les données utiles échangées entre les deux postes d'abonnés sur les canaux B sont cryptées à l'aide de la première clé de cryptage choisie, sur la portion de liaison téléphonique s'étendant entre le terminal de réseau TR1 et le terminal de ligne TL1 (étape 506).

Dans la suite de l'étape de cryptage, le microprocesseur MCDL1 va faire varier temporellement et de façon pseudo-aléatoire la clé de cryptage d'origine. En pratique, cette variation temporelle pseudo-aléatoire va se traduire par la génération successive et de façon pseudo-aléatoire dans le temps de plusieurs autres clés de cryptage.

A chaque fois qu'une nouvelle clé de cryptage sera générée par le processeur MCDL1, celui-ci va entamer avec le microprocesseur MCDR1 du terminal de réseau une procédure d'authentification analogue à celle qui a été décrite pour la première clé de cryptage. Tant que cette procédure d'authentification n'a pas abouti, le cryptage se poursuit avec l'ancienne clé. Si la procédure d'authentification ne revèle aucune anomalie, il y a alors commutation de clé.

En pratique, le microprocesseur MCDL1 interroge périodiquement l'accès au canal D. La liberté d'accès sur ce canal D est en fait aléatoire puisqu'elle dépend de l'encombrement de ce dernier et des données qui sont émises par d'autres éléments raccordés sur le réseau. Il est alors particulièrement avantageux de prévoir que le microprocesseur MCDL1 extrait de la mémoire MR la clé de cryptage CCRi stockée à l'adresse délivrée par le générateur pseudo-aléatoire à chaque fois que l'accès au canal D est libre. On réalise ainsi de façon très simple une variation pseudo-aléatoire temporelle de la clé de cryptage.

Dans le cas où le canal D serait très peu occupé, on peut avantageusement prévoir un programme de gestion de la fréquence d'horloge interne au microprocesseur. Par exemple, ce programme déclenche pseudo-aléatoirement lors d'un cycle ou d'une fraction de cycle de travail du microprocesseur, l'ordre d'extraction d'une nouvelle clé CCRi. Si le canal D est libre, il l'envoie immédiatement, sinon celle-ci est stockée en mémoire et expédiée dès que le canal est libre.

Bien entendu, pendant chaque phase de cryptage à l'aide d'une clé de cryptage particulière, cette dernière est stockée dans une mémoire de travail du microprocesseur. Afin de répondre à certaines exigences prédéterminées, on peut alors prévoir que l'opérateur du réseau dispose d'un accès réservé à cette mémoire de travail afin, le cas échéant, de pouvoir connaître en temps réel la clé de cryptage utilisée et de décrypter éventuellement les informations circulant sur la ligne d'abonné.

Bien entendu, les informations circulant entre le commutateur local CML1 et le poste d'abonné TP2 sont décryptées par les moyens de cryptage MCDL1 et circulent donc en clair sur cette partie de la liaison téléphonique.

On suppose maintenant que le poste téléphonique TP2 appartient à un abonné sécurisé.

Dans ce cas, les terminaux de réseau TR2 et de ligne TL2 de ce second abonné sont également équipés de moyens de cryptage/décryptage homologues à ceux qui viennent d'être décrits.

Dans une étape 507, l'un des terminaux de ligne, en l'espèce le terminal TL1 se déclare maître, tandis que l'autre terminal de-ligne est esclave. Le processeur correspondant MCDL1 choisit alors d'une manière analogue à celle qui a été décrite ci-avant, une clé de cryptage CCRi dans la mémoire MR et entame (étape 508) une procédure d'authentification avec le terminal de ligne TL2. Cette procédure d'authentification est analogue à celle qui a été décrite ci-avant.

Si cette procédure d'authentification s'avère correcte (étape 509), chacun des terminaux de ligne entame avec son terminal de réseau associé une procédure d'authentification analogue à celle qui a été décrite ci-avant (étapes 510 et 511).

Dans le cas où ces deux procédures d'authentification se révèlent correctes (étapes 512 et 513), le cryptage des informations échangées sur le canal B s'effectue à l'aide de la clé de cryptage choisie par le microprocesseur MCDL1 et ce, entre le terminal de réseau TR1 et le terminal de réseau TR2.

La variation pseudo-aléatoire temporelle de la clé de cryptage s'effectue également pendant l'étape de cryptage à l'initiative du microprocesseur MCDL1 de la même manière que celle qui a été décrite ci-avant, et donne lieu également à de nouvelles procédures d'authentification.

Bien entendu, dans tout ce qui vient d'être décrit, des conflits éventuels d'appels entre terminaux sont réglés par exemple par une méthode d'accès du type CSMA/CR (Carrier Sense Multiple Access/Collision Resolution) bien connue de l'homme du métier.

## Revendications

1. Procédé de sécurisation d'une liaison téléphonique reliant deux postes d'abonnés, ladite liaison comportant deux terminaux de réseau (TR1,TR2) auxquels sont respectivement connectés les deux postes d'abonnés, deux lignes d'abonnés (LA1,LA2) reliant respectivement les deux terminaux de réseau à deux terminaux de ligne (TL1,TL2) respectivement situés au niveau de deux commutateurs locaux (CML1,CML2) mutuellement reliés par un réseau téléphonique commuté (RTPC), caractérisé par le fait que, les terminaux de réseau (TR1) et de ligne (TL1) de l'une au moins des lignes d'abonnés (LA1) étant respectivement équipés de moyens de cryptage/décryptage-réseau (MCDR1) et de moyens de cryptage/décryptage-ligne (MCDL1), il comprend une étape de cryptage dans laquelle on crypte les informations utiles échangées entre les deux postes d'abonnés, au moins sur celle des deux lignes d'abonnés (LA1) connectée auxdits moyens de cryptage/décryptage, à partir d'au moins une clé de cryptage (CCRi) générée par lesdits moyens de cryptage/décryptage-réseau ou lesdits moyens de cryptage/décryptage-ligne, et variant temporellement de façon pseudo-aléatoire à l'initiative desdits moyens de cryptage/décryptage-réseau ou desdits moyens de cryptage/décryptage-ligne, les informations utiles échangées entre les deux postes d'appel étant transmises en clair au moins entre chaque terminal de réseau et le poste d'abonné correspondant.

2. Procédé selon la revendication 1, caractérisé par le fait que, chaque poste d'abonné étant connecté à son terminal de réseau correspondant par une borne d'entrée/sortie spécifique (PA1) dudit terminal de réseau, on affecte un identifiant à chaque borne d'entrée/sortie, et par le fait que ledit procédé comprend, préalablement à l'étape de cryptage, une étape d'authentification (504) dans laquelle ceux des moyens de cryptage/décryptage qui ont généré la clé de cryptage, la transmettent aux autres moyens de cryptage/décryptage, et effectuent une procédure de vérification de l'identifiant de la borne d'entrée/sortie considérée.

3. Procédé selon la revendication 2, caractérisé par le fait qu'on effectue ladite étape d'authentification (504) pendant ladite étape de cryptage (506) après chaque modification de la clé de cryptage (CCRi).

4. Procédé selon l'une des revendications précédentes, caractérisé par le fait que dans l'étape de cryptage la variation temporelle pseudo-aléatoire de la clé de cryptage générée par ceux des deux moyens de cryptage/décryptage comprend la génération temporelle successive de façon pseudo-aléatoire de plusieurs autres clé de cryptage (CCRi) par ces mêmes moyens de cryptage/décryptage.

5. Procédé selon l'une des revendications précédentes, caractérisé par le fait que les terminaux de réseau et de ligne des deux lignes d'abonnés étant respectivement équipés de moyens de cryptage/décryptage-réseau et de moyens de cryptage/décryptage-ligne, on crypte, dans l'étape de cryptage, les informations utiles échangées entre les deux postes d'abonnés sur l'ensemble de la liaison téléphonique s'étendant entre les deux terminaux de réseau (TR1,TR2) auxquels sont respectivement connectés les postes d'abonnés.

6. Procédé selon la revendication 5, caractérisé par le fait que l'étape de cryptage comprend la génération d'une clé de cryptage par les moyens de cryptage/décryptage-ligne (MCDL1) de l'un des deux terminaux de ligne, puis la transmission de cette clé de cryptage aux moyens de cryptage/décryptage-ligne (MCDL2) de l'autre terminal de ligne, les informations échangées entre les deux postes abonnés étant cryptées/décryptées à partir de cette clé de cryptage, et par le fait que les moyens de cryptage/décryptage-ligne du terminal de ligne ayant généré ladite clé de cryptage, la font varier temporellement de façon pseudoaléatoire et transmettent les clés ainsi modifiées aux-moyens de cryptage/décryptage-ligne de l'autre terminal de ligne.

7. Procédé selon l'une des revendications précédentes, caractérisé par le fait que la liaison téléphonique étant une liaison numérique comportant au moins deux canaux bidectionnels (B) pour l'échange des informations utiles entre les deux postes d'abonnés, et un canal de service (D), on transmet la ou les clé de cryptage (CCRi) sur le canal de service (D).

8. Procédé selon la revendication 7, caractérisé par le fait que les moyens de cryptage/décryptage générant la ou les clés de cryptage, scrutent périodiquement l'accès au canal de service (D), et génèrent une nouvelle clé de cryptage lorsque ledit accès est libre.

9. Procédé selon la revendication 7 ou 8 prise en combinaison avec la revendication 2, caractérisé par le fait qu'on effectue la procédure de vérification d'identifiant (504) en utilisant le canal de service (D).

10. Dispositif de sécurisation d'une liaison téléphonique reliant deux postes d'abonnés, ladite liaison comportant deux terminaux de réseau (TR1,TR2) auxquels sont respectivement connectés les deux postes d'abonnés, deux lignes d'abonnés (LA1,LA2) reliant respectivement les deux terminaux de réseau à deux terminaux de ligne respectivement situés au niveau de deux commutateurs locaux (CML1,CML2) mutuellement reliés par un réseau téléphonique commuté, caractérisé par le fait qu'il comprend au moins des moyens de cryptage/décryptage-réseau (MCDR1) et des moyens de cryptage/décryptage-ligne (MCDL1) respectivement incorporés dans les terminaux de réseau (TR1) et de ligne (TL1) de l'une au moins des lignes d'abonnés (LA1), lesdits moyens de cryptage/décryptage-réseau ou lesdits moyens de cryptage/décryptage-ligne étant aptes à générer au moins une clé de cryptage (CCRi) , à la faire varier temporellement de façon pseudo-aléatoire, et à crypter les informations utiles échangées entre les deux postes d'abonnés à partir de la clé de cryptage, au moins sur celle des deux lignes d'abonnés (LA1) connectée auxdits moyens de cryptage/décryptage (MCDR1,MCDL1), les informations échangées entre les deux postes d'appel étant transmises en clair au moins entre chaque terminal de réseau et le poste d'abonné correspondant.

11. Dispositif selon la revendication 10, caractérisé par le fait que les moyens de cryptage/décryptage-ligne (MCDL1) comportent des moyens de génération pseudo-alétoire d'une pluralité de clé de cryptage.

12. Dispositif selon la revendication 10 ou 11, caractérisé par le fait que les deux terminaux de réseau (TR1,TR2) et les deux terminaux de ligne (TL1,TL2) sont équipés de moyens de cryptage/décryptage.
